# EUROPEAN PATENT APPLICATION

(11) **EP 4 633 137 A1**
(43) Date of publication of application: **15.10.2025**
(21) Application number: 23899903.1
(22) Date of filing: 04.12.2023
(51) Int. Cl.: H04N 19/00, G06T 9/40

(54) **POINT CLOUD CODING METHOD, POINT CLOUD DECODING METHOD, AND TERMINAL**

(30) Priority: 09.12.2022 CN 202211590446
(71) Applicant: Vivo Mobile Communication Co., Ltd., Dongguan, Guangdong 523863 (CN)
(72) Inventor: ZHANG, Wei, Dongguan, Guangdong 523863 (CN); WANG, Guiqi, Dongguan, Guangdong 523863 (CN); YANG, Fuzheng, Dongguan, Guangdong 523863 (CN); LV, Zhuoyi, Dongguan, Guangdong 523863 (CN)
(74) Representative: Lavoix
(86) International application number: PCT/CN2023/136034
(87) International publication number: WO 2024/120325

(57) **Abstract**

This application discloses a point cloud encoding method, a point cloud decoding method and a terminal, and pertains to the field of encoding and decoding technology. The point cloud encoding method provided in embodiments of this application includes: obtaining geometry information of a to-be-encoded point cloud; determining at least one point cloud slice corresponding to a to-be-encoded point cloud based on the geometry information of the to-be-encoded point cloud, where the point cloud slice is generated based on block partition of a bounding box corresponding to the to-be-encoded point cloud; and for a point cloud slice meeting a single-point encoding condition, performing, based on first indication information corresponding to each to-be-encoded layer in the point cloud slice, encoding on the to-be-encoded layer to generate a target bitstream, where the to-be-encoded layer is determined based on multi-branch tree partition of the point cloud slice, and the first indication information is used to determine whether the corresponding to-be-encoded layer meets the single-point encoding condition.

## Description

### CROSS-REFERENCE TO RELATED APPLICATIONS

This application claims the priority of Chinese Patent Application No.202211590446.5, filed in China on December 9, 2022, which is incorporated herein by reference in its entirety.

### TECHNICAL FIELD

This application pertains to the field of encoding and decoding technology, and specifically, relates to a point cloud encoding method, a point cloud decoding method, and a terminal.

### BACKGROUND

Point cloud is a set of discrete points which are irregularly distributed in space and express the spatial structure and surface attributes of three-dimensional objects or scenes.

In the related art, the to-be-encoded point cloud is contained in a bounding box (bounding box). The bounding box can be partitioned into at least one point cloud slice. An encoder judges, based on preset indication information, whether each point cloud slice meets a single-point encoding condition, so as to perform single-point encoding on single points in a point cloud slice that meets the single-point encoding condition. However, the foregoing solution requires encoding of a large number of non-single-point flags (flag) for non-single points in the point cloud slice that meets the single-point encoding condition, which increases the encoding bitrate and consequently reduces the encoding efficiency.

### SUMMARY

Embodiments of this application provide a point cloud encoding method, a point cloud decoding method, and a terminal, so as to solve the related-art problem that encoding a large number of non-single point flags increases the encoding rate and reduces the encoding efficiency.

According to a first aspect, an embodiment of this application provides a point cloud encoding method, including:
obtaining, by an encoder, geometry information of a to-be-encoded point cloud;
determining, by the encoder, at least one point cloud slice corresponding to the to-be-encoded point cloud based on the geometry information of the to-be-encoded point cloud, where the point cloud slice is generated based on block partition of a bounding box corresponding to the to-be-encoded point cloud; and
for a point cloud slice meeting a single-point encoding condition, performing, by the encoder based on first indication information corresponding to each to-be-encoded layer in the point cloud slice, encoding on the to-be-encoded layer to generate a target bitstream, where the to-be-encoded layer is determined based on multi-branch tree partition of the point cloud slice, and the first indication information is used to determine whether the corresponding to-be-encoded layer meets the single-point encoding condition.

According to a second aspect, an embodiment of this application provides a point cloud decoding method, including:
obtaining, by a decoder, a target bitstream;
determining, by the decoder, a to-be-decoded point cloud corresponding to the target bitstream based on a decoding result of the target bitstream; and
for a point cloud slice meeting a single-point decoding condition in the to-be-decoded point cloud, performing, by the decoder based on second indication information corresponding to each to-be-decoded layer in the point cloud slice, decoding on the to-be-decoded layer to generate reconstructed geometry information of the to-be-decoded point cloud, where the point cloud slice is generated based on block partition of a bounding box corresponding to the to-be-decoded point cloud, the to-be-decoded layer is determined based on multi-branch tree partition of the point cloud slice, and the second indication information is used to determine whether the corresponding to-be-decoded layer meets the single-point decoding condition.

According to a third aspect, an embodiment of this application provides a point cloud encoding apparatus including:
a first obtaining module configured to obtain geometry information of a to-be-encoded point cloud;
a first determining module configured to determine at least one point cloud slice corresponding to the to-be-encoded point cloud based on the geometry information of the to-be-encoded point cloud, where the point cloud slice is generated based on block partition of a bounding box corresponding to the to-be-encoded point cloud; and
an encoding module configured to: for a point cloud slice meeting a single-point encoding condition, perform, based on first indication information corresponding to each to-be-encoded layer in the point cloud slice, encoding on the to-be-encoded layer to generate a target bitstream, where the to-be-encoded layer is determined based on multi-branch tree partition of the point cloud slice, and the first indication information is used to determine whether the corresponding to-be-encoded layer meets the single-point encoding condition.

According to a fourth aspect, an embodiment of this application provides a point cloud decoding apparatus including:
a first obtaining module configured to obtain a target bitstream;
a first determining module configured to determine a to-be-decoded point cloud corresponding to the target bitstream based on a decoding result of the target bitstream; and
a decoding module configured to: for a point cloud slice meeting a single-point decoding condition in the to-be-decoded point cloud, perform, based on second indication information corresponding to each to-be-decoded layer in the point cloud slice, decoding on the to-be-decoded layer to generate reconstructed geometry information of the to-be-decoded point cloud, where the point cloud slice is generated based on block partition of a bounding box corresponding to the to-be-decoded point cloud, the to-be-decoded layer is determined based on multi-branch tree partition of the point cloud slice, and the second indication information is used to determine whether the corresponding to-be-decoded layer meets the single-point decoding condition.

According to a fifth aspect, an embodiment of this application provides a terminal, where the terminal includes a processor and a memory, the memory stores a program or instructions capable of running on the processor, and when the program or instructions are executed by the processor, the steps of the method according to the first aspect are implemented, or the steps of the method according to the second aspect are implemented.

According to a sixth aspect, an embodiment of this application provides a readable storage medium, where the readable storage medium stores a program or instructions, and when the program or instructions are executed by a processor, the steps of the method according to the first aspect are implemented, or the steps of the method according to the second aspect are implemented.

According to a seventh aspect, an embodiment of this application provides a chip, where the chip includes a processor and a communication interface, the communication interface is coupled to the processor, and the processor is configured to run a program or instructions to implement the steps of the method according to the first aspect or the steps of the method according to the second aspect.

According to an eighth aspect, an embodiment of this application provides a computer program/program product, where the computer program/program product is stored in a storage medium, and the computer program/program product is executed by at least one processor to implement the steps of the method according to the first aspect, or implement the steps of the method according to the second aspect.

In the embodiments of this application, based on first indication information corresponding to each to-be-encoded layer, encoding is performed on the to-be-encoded layer, where the first indication information is used to determine whether the corresponding to-be-encoded layer meets a single-point encoding condition. In other words, single-point encoding can be performed on the to-be-encoded layer only when the first indication information corresponding to the to-be-encoded layer indicates that the to-be-encoded layer meets the single-point encoding condition. This reduces the number of encoding operations on non-single point flags in the process of point cloud encoding for a point cloud slice, thereby lowering the encoding bitrate and improving the encoding efficiency.

### DESCRIPTION OF DRAWINGS

FIG. 1 is a schematic diagram of a framework of a point cloud AVS-compliant point cloud encoding apparatus;
FIG. 2 is a schematic diagram of a framework of a point cloud AVS-compliant point cloud decoding apparatus;
FIG. 3 is a schematic flowchart of a point cloud encoding method according to an embodiment of this application;
FIG. 4 is a schematic flowchart of a point cloud decoding method according to an embodiment of this application;
FIG. 5 is a structural diagram of a point cloud encoding apparatus according to an embodiment of this application;
FIG. 6 is a structural diagram of a point cloud decoding apparatus according to an embodiment of this application;
FIG. 7 is a structural diagram of a communication device according to an embodiment of this application; and
FIG. 8 is a schematic diagram of a hardware structure of a terminal according to an embodiment of this application.

### DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

In the embodiments of this application, both the point cloud encoding apparatus corresponding to the point cloud encoding method and the point cloud decoding apparatus corresponding to the point cloud decoding method may be terminals. The terminal may also be referred to as a terminal device or user equipment (User Equipment, UE). The terminal may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart leglet, a smart anklet, and the like), a smart wristband, smart clothing, or the like. It should be noted that the specific type of the terminal is not limited in the embodiments of this application.

To facilitate understanding, some contents related to the embodiments of this application are described below.

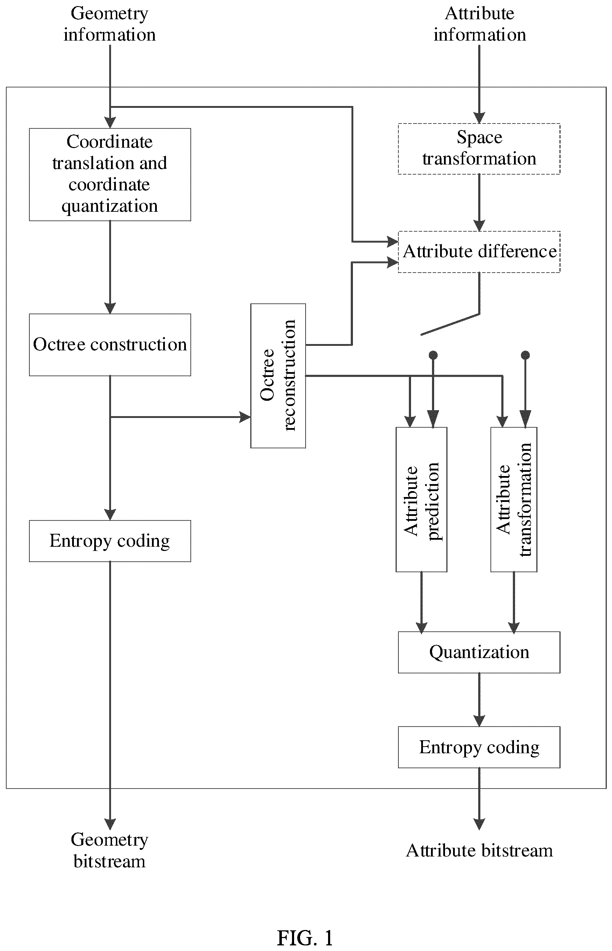

Refer to FIG. 1. As shown in FIG. 1, at present, in the technical standard of digital audio/video encoding and decoding, the point cloud encoding apparatus based on point cloud audio video coding standard (Audio Video coding Standard, AVS) is used to perform encoding on geometry information and attribute information of a point cloud separately. Firstly, coordinate transformation is performed on the geometry information, so that the point cloud is entirely contained in a bounding box (bounding box), and then coordinate quantization is performed. Quantization mainly plays the role of scaling. Because quantization involves rounding up geometry coordinates, some points have the same geometry information, which are called duplicate vertexes. Whether to remove duplicate vertexes is determined according to parameters. The two steps, quantization and duplicate vertex removal, are also called a voxelization process. Next, multi-branch tree partition, such as octree, quadtree, or binary tree partition, is performed on the bounding box. In a multi-branch tree-based geometry information encoding framework, the bounding box is octally partitioned into eight subcubes, and a non-empty subcube is further partitioned until a unit cube with 1x1x1 leaf nodes is obtained. Then, the number of points in the leaf node is encoded to generate a binary bitstream.

After the geometry encoding is completed, the geometry information is reconstructed for subsequent re-coloring. Attribute encoding is mainly specific to color and reflectivity information. Firstly, whether to perform color space conversion is determined based on parameters. If color space conversion is to be performed, color information is converted from a red-green-blue (Red Green Blue, RGB) color space to a Luma-Chroma (YUV) color space. Then, the original point cloud is used to recolor the geometrically reconstructed point cloud, so that the uncoded attribute information corresponds to the reconstructed geometry information. In color information encoding, after the points are sorted by Morton code or Hilbert code, a nearest neighbor of a point to be predicted is searched for through geometry spatial relationship, and the point to be predicted is predicted based on a reconstructed attribute value of the found neighbor to obtain a predicted attribute value. Then a difference between a real attribute value and the predicted attribute value is calculated to obtain a prediction residual. Finally, the prediction residual is quantized and encoded to generate a binary bitstream.

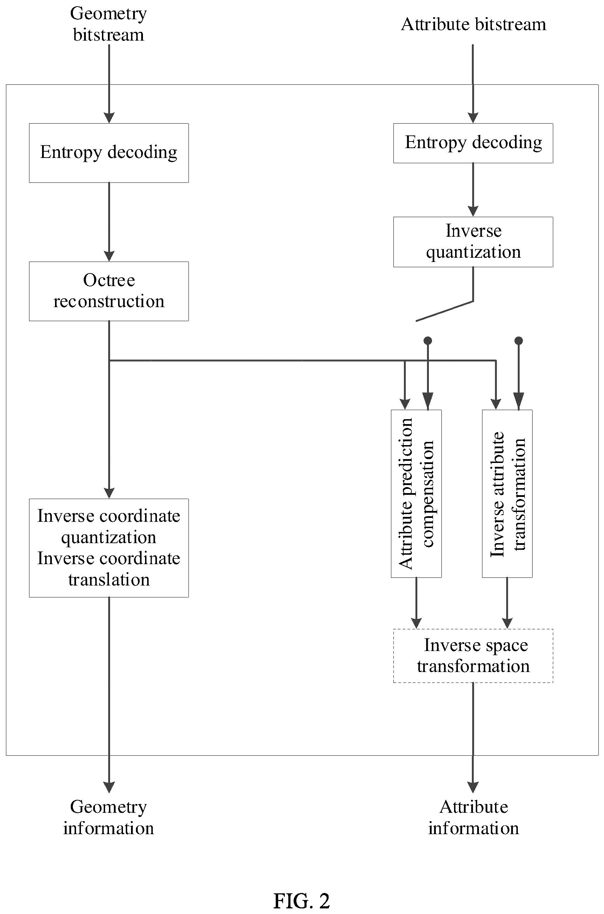

It should be understood that a decoding process in the audio video standard corresponds to the above encoding process. Specifically, a framework of an AVS point cloud decoding apparatus is shown in FIG. 2.

This application provides a point cloud encoding method. The following details the point cloud encoding method according to an embodiment of this application through some embodiments and application scenarios thereof with reference to the accompanying drawings.

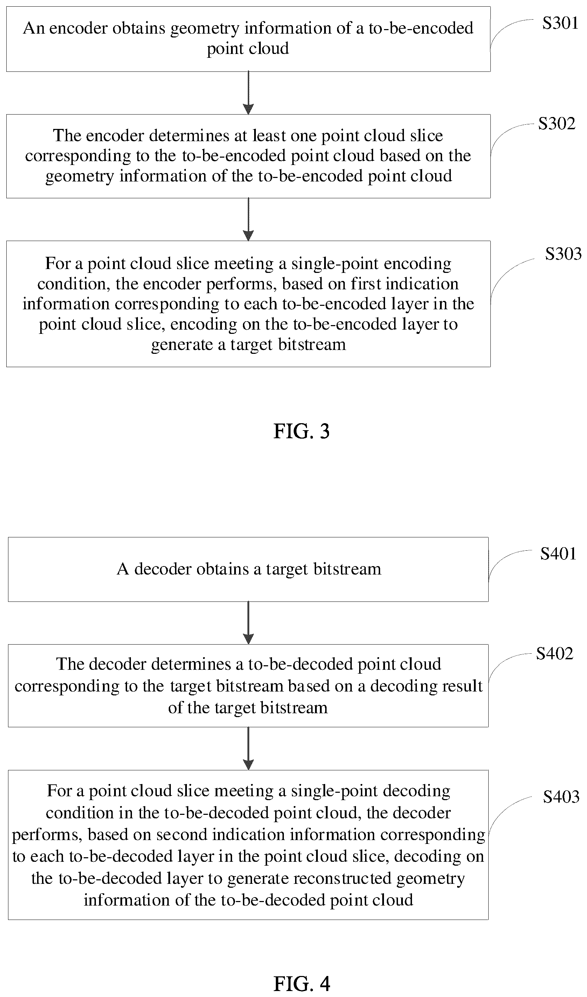

Referring to FIG. 3, FIG. 3 is a flowchart of a point cloud encoding method according to an embodiment of this application. The point cloud encoding method provided in this embodiment includes the following steps.

S301. An encoder obtains geometry information of a to-be-encoded point cloud.

S302. The encoder determines at least one point cloud slice corresponding to the to-be-encoded point cloud based on the geometry information of the to-be-encoded point cloud.

In this step, after the geometry information of the to-be-encoded point cloud is obtained, coordinate translation and coordinate quantization can be performed on a geometry position of the to-be-encoded point cloud to generate a bounding box containing the to-be-encoded point cloud. Block partition is performed on the bounding box based on a parameter in geometry header information to generate at least two point cloud slices corresponding to the bounding box. It should be understood that the parameter in the geometry header information may indicate not to perform block partition on the bounding box. In this case, the bounding box can be determined as one point cloud slice.

S303. For a point cloud slice meeting a single-point encoding condition, the encoder performs, based on first indication information corresponding to each to-be-encoded layer in the point cloud slice, encoding on the to-be-encoded layer to generate a target bitstream.

It should be understood that after block partition is performed on the bounding box, the geometry header information is encoded, where the geometry header information has a parameter indicating whether the to-be-encoded point cloud meets the single-point encoding condition. In a case that the parameter in the geometry header information indicate that the to-be-encoded point cloud meets the single-point encoding condition, the geometry header information is encoded, where the geometry header information has a parameter indicating whether the corresponding point cloud slice meets the single-point encoding condition; and if the parameter in the geometry header information indicates that the point cloud slice meets the single-point encoding condition, the point cloud slice is determined as a point cloud slice meeting the single-point encoding condition.

In this step, the encoder can perform multi-branch tree partition on the point cloud slice meeting the single-point encoding condition, to obtain a plurality of to-be-encoded layers corresponding to the point cloud slice, where the multi-branch tree partition includes but is not limited to binary tree partition, quadtree partition, and octree partition.

For each to-be-encoded layer, based on the first indication information corresponding to the to-be-encoded layer, encoding is performed on the to-be-encoded layer to generate a target bitstream, where the first indication information is used to determine whether the corresponding to-be-encoded layer meets the single-point encoding condition. For the specific technical scheme of how to perform encoding on the to-be-encoded layer, reference may be made to the subsequent embodiments.

It should be noted that for a point cloud slice not meeting the single-point encoding condition, the encoder can perform geometry encoding on a to-be-coded point in the point cloud slice.

In the embodiments of this application, based on first indication information corresponding to each to-be-encoded layer, encoding is performed on the to-be-encoded layer, where the first indication information is used to determine whether the corresponding to-be-encoded layer meets a single-point encoding condition. In other words, single-point encoding can be performed on the to-be-encoded layer only when the first indication information corresponding to the to-be-encoded layer indicates that the to-be-encoded layer meets the single-point encoding condition. This reduces the number of encoding operations on non-single point flags in the process of point cloud encoding for a point cloud slice, thereby lowering the encoding bitrate and improving the encoding efficiency.

Optionally, the performing, based on first indication information corresponding to each to-be-encoded layer in the point cloud slice, encoding on the to-be-encoded layer includes:
performing, by the encoder, encoding on each single point in each to-be-encoded layer and geometry encoding on each non-single point in each to-be-encoded layer in a case that the first indication information is used to indicate that each to-be-encoded layer in the point cloud slice meets the single-point encoding condition.

In an optional embodiment, the encoder obtains in advance a piece of first indication information corresponding to a point cloud slice meeting the single-point encoding condition, where the first indication information is associated with each to-be-encoded layer in the point cloud slice, and the first indication information is used to indicate that each to-be-encoded layer in the point cloud slice meets the single-point encoding condition. Optionally, the first indication information can be expressed as a single-point eligible flag (SinglePointEligibleFlag). In a case that the first indication information in the point cloud slice meeting the single-point encoding condition indicates that each to-be-encoded layer in the point cloud slice meets the single-point encoding condition, single-point encoding is performed on each single point in each to-be-encoded layer, and geometry encoding is performed on each non-single point in each to-be-encoded layer.

It should be understood that the manner of performing single-point encoding on the to-be-encoded layer may be: introducing a flag for each to-be-encoded point in the to-be-encoded layer, where the flag indicates whether the corresponding to-be-encoded point is an single point. Optionally, in a case that a value of the flag is 0, it indicates that the corresponding to-be-encoded point is not an single point; in a case that a value of the flag is 1, it indicates that the corresponding to-be-encoded point is an single point. For an single point in the to-be-encoded layer, encoding is performed on geometry coordinates of the single point through arithmetic encoding. For a non-single point in the to-be-encoded layer, geometry encoding is performed based on multi-branch tree partition.

Optionally, the performing, based on first indication information corresponding to each to-be-encoded layer in the point cloud slice, encoding on the to-be-encoded layer includes:
performing, by the encoder, single-point encoding on each single point in the to-be-encoded layer and geometry encoding on each non-single point in the to-be-encoded layer in a case that the first indication information corresponding to the to-be-encoded layer indicates that the single-point encoding condition is met; or
performing, by the encoder, geometry encoding on each to-be-encoded point in the to-be-encoded layer in a case that the first indication information corresponding to the to-be-encoded layer indicates that the single-point encoding condition is not met.

In another optional embodiment, each to-be-encoded layer corresponds to one piece of first indication information. Optionally, the first indication information can be expressed as SinglePointEligibleFlag[K], where K represents a layer number corresponding to the to-be-encoded layer, for example, SinglePointEligibleFlag[1] is first indication information corresponding to a first to-be-encoded layer. In this case, if the first indication information corresponding to the to-be-encoded layer indicates that the single-point encoding condition is met, single-point encoding is performed on each single point in the to-be-encoded layer, and geometry encoding is performed on each non-single point in the to-be-encoded layer.

If the first indication information corresponding to the to-be-encoded layer indicates that the single-point encoding condition is not met, geometry encoding is performed on each to-be-encoded point in the to-be-encoded layer.

In this embodiment, the to-be-encoded layer meeting the single-point encoding condition is determined based on the first indication information, and then single-point encoding is performed on the to-be-encoded layer. This reduces the number of encoding operations on non-single point flags in the process of geometry encoding for a point cloud slice, thereby lowering the encoding bitrate and improving the encoding efficiency.

Optionally, the method further includes:
obtaining, by the encoder, a first number of to-be-encoded points included in the to-be-encoded layer and a second number of nodes included in the to-be-encoded layer; and
in a case that a ratio between the first number and the second number is less than or equal to a first preset threshold, determining, by the encoder, that the first indication information corresponding to the to-be-encoded layer indicates that the single-point encoding condition is met.

In this embodiment, whether the to-be-encoded layer meets the single-point encoding condition can be determined based on the number of to-be-encoded points included in the to-be-encoded layer and the number of nodes included in the to-be-encoded layer. Specifically, the first number of to-be-encoded points included in the to-be-encoded layer can be divided by the second number of nodes included in the to-be-encoded layer. If the division result is less than or equal to the first preset threshold, it is determined that the first indication information corresponding to the to-be-encoded layer indicates that the single-point encoding condition is met. The first preset threshold is a user-defined value.

In this embodiment, whether the to-be-encoded layer meets the single-point encoding condition is determined based on the number of to-be-encoded points included in the to-be-encoded layer and the number of nodes included in the to-be-encoded layer. The foregoing manner of determining whether the to-be-encoded layer meets the single-point encoding condition does not require the encoder to transmit an additional bitstream, and whether the to-be-encoded layer meets the single-point encoding condition is determined through indication information in the bitstream, thereby reducing the encoding bitrate and improving the encoding efficiency.

Optionally, the first indication information is indication information agreed in a protocol, or the first indication information is determined based on the number of to-be-encoded points included in the corresponding to-be-encoded layer and the number of nodes included in the corresponding to-be-encoded layer.

In an optional embodiment, the first indication information is the number of shifts agreed in the protocol. In this embodiment, the first indication information can be directly specified at the encoder.

Optionally, the first indication information may be transmitted to a decoder. The first indication information may be written into a syntax parameter set, a sequence parameter set, a geometry parameter set, or a slice parameter set, or directly encoded into the target bitstream, and transmitted to the decoder in the above manner.

In another optional embodiment, the first indication information is determined based on the number of to-be-encoded points included in the to-be-encoded layer and the number of nodes included in the to-be-encoded layer. For specific implementation, reference may be made to the above embodiments.

Optionally, in this embodiment, the first indication information may not be transmitted to the decoder.

Referring to FIG. 4, FIG. 4 is a schematic flowchart of a point cloud decoding method according to an embodiment of this application. The point cloud decoding method provided in this embodiment includes the following steps.

S401. A decoder obtains a target bitstream.

S402. The decoder determines a to-be-decoded point cloud corresponding to the target bitstream based on a decoding result of the target bitstream.

In this step, decoding is performed on the obtained target bitstream to obtain the to-be-decoded point cloud.

S403. For a point cloud slice meeting a single-point decoding condition in the to-be-decoded point cloud, the decoder performs, based on second indication information corresponding to each to-be-decoded layer in the point cloud slice, decoding on the to-be-decoded layer to generate reconstructed geometry information of the to-be-decoded point cloud.

In this step, based on the decoding result of the target bitstream, the bounding box containing the to-be-decoded point cloud and the parameter indicating to perform block partition of the bounding box are generated. According to the above parameters, block partition is performed on the bounding box to generate at least two point cloud slices corresponding to the bounding box. It should be understood that the above parameter may indicate not to perform block partition on the bounding box. In this case, the bounding box can be determined as one point cloud slice.

Based on the decoding result of the target bitstream, the point cloud slice meeting the single-point decoding condition is determined. Multi-branch tree partition is performed on the point cloud slice meeting the single-point decoding condition to obtain a plurality of to-be-decoded layers corresponding to the point cloud slice, where the multi-branch tree partition includes but is not limited to binary tree partition, quadtree partition, and octree partition. For each to-be-decoded layer, based on the second indication information corresponding to the to-be-decoded layer, decoding is performed on the to-be-decoded layer to generate the reconstructed geometry information of the to-be-decoded point cloud.

In the embodiments of this application, based on second indication information corresponding to each to-be-decoded layer, decoding is performed on the to-be-decoded layer, where the second indication information is used to determine whether the corresponding to-be-decoded layer meets a single-point decoding condition. In other words, single-point decoding can be performed on the to-be-decoded layer only when the second indication information corresponding to the to-be-decoded layer indicates that the to-be-decoded layer meets the single-point decoding condition. This reduces the number of decoding operations on non-single point flags in the process of point cloud decoding for a point cloud slice, thereby lowering the decoding bitrate and improving the decoding efficiency.

Optionally, the performing, based on second indication information corresponding to each to-be-decoded layer in the point cloud slice, decoding on the to-be-decoded layer includes:
performing, by the decoder, single-point decoding on each single point in each to-be-decoded layer and geometry decoding on each non-single point in each to-be-decoded layer in a case that the second indication information is used to indicate that each to-be-decoded layer in the point cloud slice meets the single-point decoding condition.

In an optional embodiment, the decoder performs decoding on the target bitstream, and obtains a piece of second indication information corresponding to a point cloud slice meeting the single-point decoding condition, where the second indication information is associated with each to-be-decoded layer in the point cloud slice, and the second indication information is used to indicate that each to-be-decoded layer in the point cloud slice meets the single-point decoding condition. Optionally, the second indication information can be expressed as SinglePointEligibleFlag. In this case, single-point decoding is performed on each single point in each to-be-decoded layer, and geometry decoding is performed on each non-single point in each to-be-decoded layer.

It should be understood that the manner of performing single-point decoding on the to-be-decoded layer may be: introducing a flag for each to-be-decoded point in the to-be-decoded layer, where the flag indicates whether the corresponding to-be-decoded point is an single point. Optionally, in a case that a value of the flag is 0, it indicates that the corresponding to-be-decoded point is not an single point; in a case that a value of the flag is 1, it indicates that the corresponding to-be-decoded point is an single point. For an single point in the to-be-decoded layer, decoding is performed on the single point through arithmetic decoding. For a non-single point in the to-be-decoded layer, geometry decoding is performed.

Optionally, the performing, based on second indication information corresponding to each to-be-decoded layer in the point cloud slice, decoding on the to-be-decoded layer includes:
performing, by the decoder, single-point decoding on each single point in the to-be-decoded layer and geometry decoding on each non-single point in the to-be-decoded layer in a case that the second indication information corresponding to the to-be-decoded layer indicates that the single-point decoding condition is met; or
performing, by the decoder, geometry decoding on each to-be-decoded point in the to-be-decoded layer in a case that the second indication information corresponding to the to-be-decoded layer indicates that the single-point decoding condition is not met.

In another optional embodiment, each to-be-decoded layer corresponds to one piece of second indication information, and the decoder performs decoding on the target bitstream to obtain a plurality of second indication information. Optionally, the second indication information can be expressed as SinglePointEligibleFlag[K], where K represents a layer number corresponding to the to-be-decoded layer, for example, SinglePointEligibleFlag[1] is second indication information corresponding to a first to-be-decoded layer. In this case, if the second indication information corresponding to the to-be-decoded layer indicates that the single-point decoding condition is met, single-point decoding is performed on each single point in the to-be-decoded layer, and geometry decoding is performed on each non-single point in the to-be-decoded layer.

If the second indication information corresponding to the to-be-decoded layer indicates that the single-point decoding condition is not met, geometry decoding is performed on each to-be-decoded point in the to-be-decoded layer.

Optionally, the method further includes:
obtaining, by the decoder, a third number of to-be-decoded points included in the to-be-decoded layer and a fourth number of nodes included in the to-be-decoded layer; and
in a case that a ratio between the third number and the fourth number is less than or equal to a second preset threshold, determining, by the decoder, that the second indication information corresponding to the to-be-decoded layer indicates that the single-point decoding condition is met.

In this embodiment, the third number of to-be-decoded points included in the to-be-decoded layer can be divided by the fourth number of nodes included in the to-be-decoded layer. If the division result is less than or equal to the second preset threshold, it is determined that the second indication information corresponding to the to-be-decoded layer indicates that the single-point decoding condition is met. The second preset threshold is a user-defined value.

Optionally, the second indication information is indication information obtained by performing decoding on the target bitstream, or the second indication information is determined based on the number of to-be-decoded points included in the corresponding to-be-decoded layer and the number of nodes included in the corresponding to-be-decoded layer.

In an optional embodiment, the second indication information is indication information obtained by performing decoding on the target bitstream.

In another optional embodiment, the second indication information is determined based on the number of to-be-decoded points included in the to-be-decoded layer and the number of nodes included in the to-be-decoded layer. In a case that the target bitstream carries no second indication information, for how to determine the second indication information, reference may be made to the above embodiments.

It should be understood that the point cloud encoding method provided in the embodiments of this application can reduce the encoding time and the point cloud decoding method provided in the embodiments of this application can reduce the decoding time. For ease of understanding, reference may be made to Table 1.

**Table 1**

| | | Encoding time ratio | Decoding time ratio |
|---|---|---|---|
| Point cloud type 1 | Sequence 1 | 89.2% | 92.8% |
| | Sequence 2 | 88.6% | 91.6% |
| | Sequence 3 | 89.8% | 93.4% |
| Point cloud type 2 | Sequence 4 | 87.9% | 95.6% |
| | Sequence 5 | 76.0% | 79.4% |
| | Sequence 6 | 90.0% | 99.8% |
| Point cloud type 3 | Sequence 7 | 88% | 100% |
| | Sequence 8 | 88% | 100% |
| | Sequence 9 | 87% | 98% |
| Point cloud type 4 | Sequence 10 | 86% | 94% |
| | Sequence 11 | 86% | 94% |
| | Sequence 12 | 89% | 95% |
| Point cloud type 5 | Sequence 13 | 92.9% | 99.2% |
| | Sequence 14 | 93% | 99.7% |
| | Sequence 15 | 92.9% | 99.6% |

It should be noted that the point cloud types are different data types corresponding to point clouds. Optionally, the point cloud type 1 may be denoted as "AVSCat1A", the point cloud type 2 may be denoted as "AVSCat1B", the point cloud type 3 may be denoted as "AVSCat1C", the point cloud type 4 may be denoted as "AVSCat2-frame", and the point cloud type 5 may be denoted as "AVSCat3". The sequences are user-defined point cloud sequences.

For example, "88.6%" in row 3 and column 3 of Table 1 indicates that a ratio of an encoding time of the point cloud encoding method provided in the embodiments of this application to an encoding time of the point cloud encoding method in the related art is 88.6%. "93.4%" in row 4 and column 4 of Table 1 indicates that a ratio of a decoding time of the point cloud decoding method provided in the embodiments of this application to a decoding time of the point cloud decoding method in the related art is 93.4%.

It can be seen from Table 1 that compared with the point cloud encoding method in the related art, the point cloud encoding method provided in the embodiments of this application reduces the encoding time, thereby improving the encoding efficiency. Compared with the point cloud decoding method in the related art, the point cloud decoding method provided in the embodiments of this application reduces the decoding time, thereby improving the decoding efficiency.

The point cloud encoding method provided in the embodiments of this application can be executed by a point cloud encoding apparatus. In the embodiments of this application, the point cloud encoding apparatus performing the point cloud encoding method is used as an example to describe a point cloud encoding apparatus provided in an embodiment of this application.

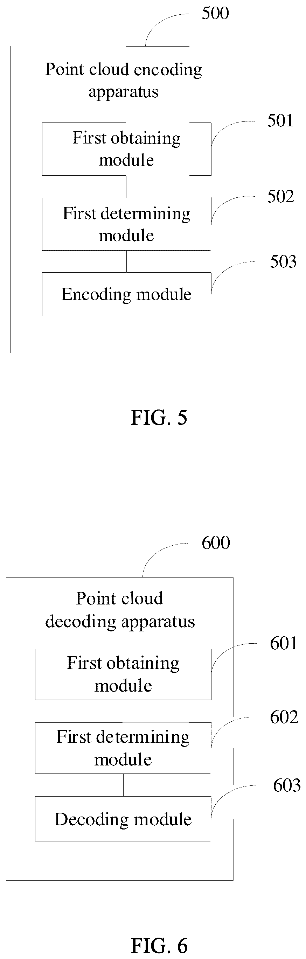

As shown in FIG. 5, an embodiment of this application further provides a point cloud encoding apparatus 500 including:
a first obtaining module 501 configured to obtain geometry information of a to-be-encoded point cloud;
a first determining module 502 configured to determine at least one point cloud slice corresponding to the to-be-encoded point cloud based on the geometry information of the to-be-encoded point cloud, where the point cloud slice is generated based on block partition of a bounding box corresponding to the to-be-encoded point cloud; and
an encoding module 503 configured to: for a point cloud slice meeting a single-point encoding condition, perform, based on first indication information corresponding to each to-be-encoded layer in the point cloud slice, encoding on the to-be-encoded layer to generate a target bitstream, where the to-be-encoded layer is determined based on multi-branch tree partition of the point cloud slice, and the first indication information is used to determine whether the corresponding to-be-encoded layer meets the single-point encoding condition.

Optionally, the encoding module 503 is specifically configured to:
perform encoding on each single point in each to-be-encoded layer and geometry encoding on each non-single point in each to-be-encoded layer in a case that the first indication information is used to indicate that each to-be-encoded layer in the point cloud slice meets the single-point encoding condition.

Optionally, the encoding module 503 is further specifically configured to:
perform single-point encoding on each single point in the to-be-encoded layer and geometry encoding on each non-single point in the to-be-encoded layer in a case that the first indication information corresponding to the to-be-encoded layer indicates that the single-point encoding condition is met; or
perform geometry encoding on each to-be-encoded point in the to-be-encoded layer in a case that the first indication information corresponding to the to-be-encoded layer indicates that the single-point encoding condition is not met.

Optionally, the point cloud encoding apparatus 500 further includes:
a second obtaining module configured to obtain a first number of to-be-encoded points included in the to-be-encoded layer and a second number of nodes included in the to-be-encoded layer; and
a second determining module configured to: in a case that a ratio between the first number and the second number is less than or equal to a first preset threshold, determine that the first indication information corresponding to the to-be-encoded layer indicates that the single-point encoding condition is met.

Optionally, the first indication information is indication information agreed in a protocol, or the first indication information is determined based on the number of to-be-encoded points included in the corresponding to-be-encoded layer and the number of nodes included in the corresponding to-be-encoded layer.

In the embodiments of this application, based on first indication information corresponding to each to-be-encoded layer, encoding is performed on the to-be-encoded layer, where the first indication information is used to determine whether the corresponding to-be-encoded layer meets a single-point encoding condition. In other words, single-point encoding can be performed on the to-be-encoded layer only when the first indication information corresponding to the to-be-encoded layer indicates that the to-be-encoded layer meets the single-point encoding condition. This reduces the number of encoding operations on non-single point flags in the process of point cloud encoding for a point cloud slice, thereby lowering the encoding bitrate and improving the encoding efficiency.

This apparatus embodiment corresponds to the point cloud encoding method embodiment in FIG. 3. The processes and implementations related to the encoder in the above method embodiments can be applied to this apparatus embodiment, with the same technical effects achieved.

The point cloud decoding method provided in the embodiments of this application can be executed by a point cloud decoding apparatus. In the embodiments of this application, the point cloud decoding apparatus performing the point cloud decoding method is used as an example to describe a point cloud decoding apparatus provided in an embodiment of this application.

As shown in FIG. 6, an embodiment of this application further provides a point cloud decoding apparatus 600 including:
a first obtaining module 601 configured to obtain a target bitstream;
a first determining module 602 configured to determine a to-be-decoded point cloud corresponding to the target bitstream based on a decoding result of the target bitstream; and
a decoding module 603 configured to: for a point cloud slice meeting a single-point decoding condition in the to-be-decoded point cloud, perform, based on second indication information corresponding to each to-be-decoded layer in the point cloud slice, decoding on the to-be-decoded layer to generate reconstructed geometry information of the to-be-decoded point cloud, where the point cloud slice is generated based on block partition of a bounding box corresponding to the to-be-decoded point cloud, the to-be-decoded layer is determined based on multi-branch tree partition of the point cloud slice, and the second indication information is used to determine whether the corresponding to-be-decoded layer meets the single-point decoding condition.

Optionally, the decoding module 603 is specifically configured to:
perform single-point decoding on each single point in each to-be-decoded layer and geometry decoding on each non-single point in each to-be-decoded layer in a case that the second indication information is used to indicate that each to-be-decoded layer in the point cloud slice meets the single-point decoding condition.

Optionally, the decoding module 603 is further specifically configured to:
perform single-point decoding on each single point in the to-be-decoded layer and geometry decoding on each non-single point in the to-be-decoded layer in a case that the second indication information corresponding to the to-be-decoded layer indicates that the single-point decoding condition is met; or
perform geometry decoding on each to-be-decoded point in the to-be-decoded layer in a case that the second indication information corresponding to the to-be-decoded layer indicates that the single-point decoding condition is not met.

Optionally, the point cloud decoding apparatus 600 further includes:
a second obtaining module configured to obtain a third number of to-be-decoded points included in the to-be-decoded layer and a fourth number of nodes included in the to-be-decoded layer; and
a second determining module configured to, in a case that a ratio between the third number and the fourth number is less than or equal to a second preset threshold, determine that the second indication information corresponding to the to-be-decoded layer indicates that the single-point decoding condition is met.

Optionally, the second indication information is indication information obtained by performing decoding on the target bitstream, or the second indication information is determined based on the number of to-be-decoded points included in the corresponding to-be-decoded layer and the number of nodes included in the corresponding to-be-decoded layer.

The point cloud decoding apparatus provided in this embodiment of this application is capable of implementing the processes implemented in the method embodiment of FIG. 4, with the same technical effects achieved. To avoid repetition, details are not described herein again.

The point cloud encoding apparatus and point cloud decoding apparatus in the embodiments of this application may each be an electronic device, such as an electronic device having an operating system, or a component in an electronic device, such as an integrated circuit or a chip. The electronic device may be a terminal or another device different from the terminal. For example, the terminal may include but is not limited to the types of the terminal listed above, and the another device may be a server, a network attached storage (Network Attached Storage, NAS), or the like, which are not specifically limited in the embodiments of this application.

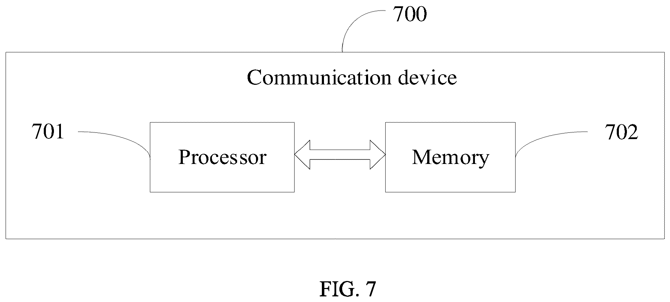

Optionally, as shown in FIG. 7, an embodiment of this application further provides a communication device 700 including a processor 701 and a memory 702. The memory 702 stores a program or instructions capable of running on the processor 701. For example, in a case that the communication device 700 is a terminal, when the program or instructions are executed by the processor 701, the steps of the foregoing point cloud encoding method embodiment are implemented or the steps of the foregoing point cloud decoding method embodiment are implemented, with the same technical effects achieved.

An embodiment of this application further provides a terminal including a processor and a communication interface. The processor is configured to perform the following operations:
obtaining geometry information of a to-be-encoded point cloud;
determining at least one point cloud slice corresponding to the to-be-encoded point cloud based on the geometry information of the to-be-encoded point cloud; and
for a point cloud slice meeting a single-point encoding condition, performing, based on first indication information corresponding to each to-be-encoded layer in the point cloud slice, encoding on the to-be-encoded layer to generate a target bitstream.

Alternatively, the processor is configured to perform the following operations:
obtaining a target bitstream;
determining a to-be-decoded point cloud corresponding to the target bitstream based on a decoding result of the target bitstream; and
for a point cloud slice meeting a single-point decoding condition in the to-be-decoded point cloud, performing, based on second indication information corresponding to each to-be-decoded layer in the point cloud slice, decoding on the to-be-decoded layer to generate reconstructed geometry information of the to-be-decoded point cloud.

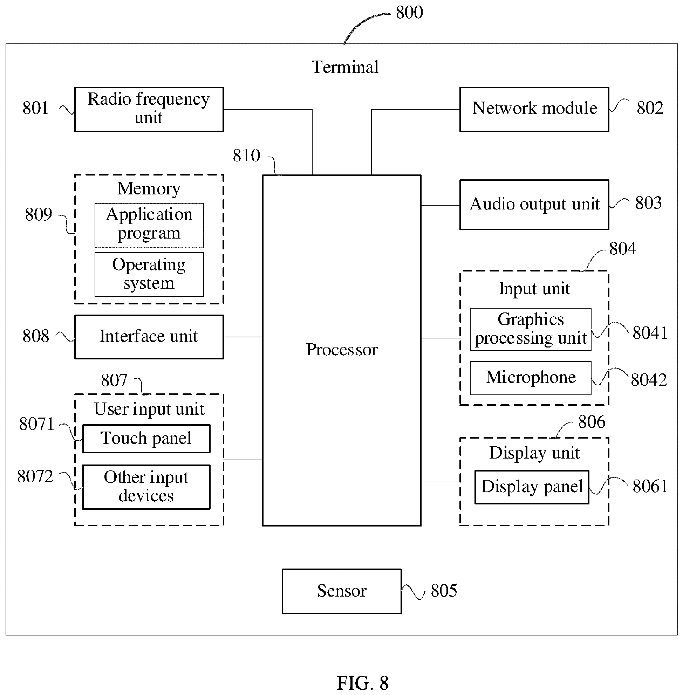

This terminal embodiment corresponds to the above method embodiments at the encoder or the decoder. The processes and implementations of the above method embodiments can be applied to this terminal embodiment, with the same technical effects achieved. Specifically, FIG. 8 is a schematic diagram of a hardware structure of a terminal implementing an embodiment of this application.

The terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) supplying power to the components, and the power supply may be logically connected to the processor 810 through a power management system, so as to implement functions such as charging management, discharging management, and power consumption management through the power management system. The structure of the terminal shown in FIG. 8 does not constitute any limitation on the terminal. The terminal may include more or fewer components than shown in the figure, or a combination of some components, or the components disposed differently. Details are not described herein.

It can be understood that in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but is not limited to a physical keyboard, a function key (such as a volume control key or an on/off key), a trackball, a mouse, and a joystick. Details are not described herein.

In the embodiment of this application, after receiving downlink data from a network-side device, the radio frequency unit 801 can transmit the downlink data to the processor 810 for processing. The radio frequency unit 801 can send uplink data to the network-side device. Typically, the radio frequency unit 801 includes but is not limited to an antenna, an amplifier, a transceiver, a coupler, a low noise amplifier, and a duplexer.

The memory 809 may be configured to store software programs or instructions and various data. The memory 809 may mainly include a first storage area for storing programs or instructions and a second storage area for storing data. The first storage area may store an operating system, an application program or instructions required by at least one function (for example, a sound play function or an image play function), and the like. Additionally, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 809 in the embodiment of this application includes but is not limited to these and any other suitable types of memory.

The processor 810 may include one or more processing units. Optionally, an application processor and a modem processor are integrated in the processor 810, where the application processor mainly processes operations related to an operating system, a user interface, an application program, and the like, and the modem processor, such as a baseband processor, mainly processes wireless communication signals. It can be understood that the modem processor may alternatively be not integrated in the processor 810.

The processor 801 is configured to perform the following operations:
obtaining geometry information of a to-be-encoded point cloud;
determining at least one point cloud slice corresponding to the to-be-encoded point cloud based on the geometry information of the to-be-encoded point cloud; and
for a point cloud slice meeting a single-point encoding condition, performing, based on first indication information corresponding to each to-be-encoded layer in the point cloud slice, encoding on the to-be-encoded layer to generate a target bitstream.

Alternatively, the processor 801 is further configured to perform the following operations:
obtaining a target bitstream;
determining a to-be-decoded point cloud corresponding to the target bitstream based on a decoding result of the target bitstream; and
for a point cloud slice meeting a single-point decoding condition in the to-be-decoded point cloud, performing, based on second indication information corresponding to each to-be-decoded layer in the point cloud slice, decoding on the to-be-decoded layer to generate reconstructed geometry information of the to-be-decoded point cloud.

An embodiment of this application further provides a readable storage medium. The readable storage medium stores a program or instructions. When the program or instructions are executed by a processor, the processes of the foregoing point cloud encoding method embodiment are implemented, or the processes of the foregoing point cloud decoding method embodiment are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions to implement the foregoing point cloud encoding method embodiment or the foregoing point cloud decoding method embodiment, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing point cloud encoding method embodiment or the foregoing point cloud decoding method embodiment, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A point cloud encoding method, comprising:
obtaining, by an encoder, geometry information of a to-be-encoded point cloud;
determining, by the encoder, at least one point cloud slice corresponding to the to-be-encoded point cloud based on the geometry information of the to-be-encoded point cloud, wherein the point cloud slice is generated based on block partition of a bounding box corresponding to the to-be-encoded point cloud; and
for a point cloud slice meeting a single-point encoding condition, performing, by the encoder based on first indication information corresponding to each to-be-encoded layer in the point cloud slice, encoding on the to-be-encoded layer to generate a target bitstream, wherein the to-be-encoded layer is determined based on multi-branch tree partition of the point cloud slice, and the first indication information is used to determine whether the corresponding to-be-encoded layer meets the single-point encoding condition.

2. The method according to claim 1, wherein the performing, based on first indication information corresponding to each to-be-encoded layer in the point cloud slice, encoding on the to-be-encoded layer comprises:
performing, by the encoder, encoding on each single point in each to-be-encoded layer and geometry encoding on each non-single point in each to-be-encoded layer in a case that the first indication information is used to indicate that each to-be-encoded layer in the point cloud slice meets the single-point encoding condition.

3. The method according to claim 1, wherein the performing, based on first indication information corresponding to each to-be-encoded layer in the point cloud slice, encoding on the to-be-encoded layer comprises:
performing, by the encoder, single-point encoding on each single point in the to-be-encoded layer and geometry encoding on each non-single point in the to-be-encoded layer in a case that the first indication information corresponding to the to-be-encoded layer indicates that the single-point encoding condition is met; or
performing, by the encoder, geometry encoding on each to-be-encoded point in the to-be-encoded layer in a case that the first indication information corresponding to the to-be-encoded layer indicates that the single-point encoding condition is not met.

4. The method according to claim 3, wherein the method further comprises:
obtaining, by the encoder, a first number of to-be-encoded points comprised in the to-be-encoded layer and a second number of nodes comprised in the to-be-encoded layer; and
in a case that a ratio between the first number and the second number is less than or equal to a first preset threshold, determining, by the encoder, that the first indication information corresponding to the to-be-encoded layer indicates that the single-point encoding condition is met.

5. The method according to any one of claims 1 to 4, wherein the first indication information is indication information agreed in a protocol, or the first indication information is determined based on the number of to-be-encoded points comprised in the corresponding to-be-encoded layer and the number of nodes comprised in the corresponding to-be-encoded layer.

6. A point cloud decoding method, comprising:
obtaining, by a decoder, a target bitstream;
determining, by the decoder, a to-be-decoded point cloud corresponding to the target bitstream based on a decoding result of the target bitstream; and
for a point cloud slice meeting a single-point decoding condition in the to-be-decoded point cloud, performing, by the decoder based on second indication information corresponding to each to-be-decoded layer in the point cloud slice, decoding on the to-be-decoded layer to generate reconstructed geometry information of the to-be-decoded point cloud, wherein the point cloud slice is generated based on block partition of a bounding box corresponding to the to-be-decoded point cloud, the to-be-decoded layer is determined based on multi-branch tree partition of the point cloud slice, and the second indication information is used to determine whether the corresponding to-be-decoded layer meets the single-point decoding condition.

7. The method according to claim 6, wherein the performing, based on second indication information corresponding to each to-be-decoded layer in the point cloud slice, decoding on the to-be-decoded layer comprises:
performing, by the decoder, single-point decoding on each single point in each to-be-decoded layer and geometry decoding on each non-single point in each to-be-decoded layer in a case that the second indication information is used to indicate that each to-be-decoded layer in the point cloud slice meets the single-point decoding condition.

8. The method according to claim 6, wherein the performing, based on second indication information corresponding to each to-be-decoded layer in the point cloud slice, decoding on the to-be-decoded layer comprises:
performing, by the decoder, single-point decoding on each single point in the to-be-decoded layer and geometry decoding on each non-single point in the to-be-decoded layer in a case that the second indication information corresponding to the to-be-decoded layer indicates that the single-point decoding condition is met; or
performing, by the decoder, geometry decoding on each to-be-decoded point in the to-be-decoded layer in a case that the second indication information corresponding to the to-be-decoded layer indicates that the single-point decoding condition is not met.

9. The method according to claim 8, wherein the method further comprises:
obtaining, by the decoder, a third number of to-be-decoded points comprised in the to-be-decoded layer and a fourth number of nodes comprised in the to-be-decoded layer; and
in a case that a ratio between the third number and the fourth number is less than or equal to a second preset threshold, determining, by the decoder, that the second indication information corresponding to the to-be-decoded layer indicates that the single-point decoding condition is met.

10. The method according to any one of claims 6 to 9, wherein the second indication information is indication information obtained by performing decoding on the target bitstream, or the second indication information is determined based on the number of to-be-decoded points comprised in the corresponding to-be-decoded layer and the number of nodes comprised in the corresponding to-be-decoded layer.

11. A point cloud encoding apparatus, comprising:
a first obtaining module configured to obtain geometry information of a to-be-encoded point cloud;
a first determining module configured to determine at least one point cloud slice corresponding to the to-be-encoded point cloud based on the geometry information of the to-be-encoded point cloud, wherein the point cloud slice is generated based on block partition of a bounding box corresponding to the to-be-encoded point cloud; and
an encoding module configured to: for a point cloud slice meeting a single-point encoding condition, perform, based on first indication information corresponding to each to-be-encoded layer in the point cloud slice, encoding on the to-be-encoded layer to generate a target bitstream, wherein the to-be-encoded layer is determined based on multi-branch tree partition of the point cloud slice, and the first indication information is used to determine whether the corresponding to-be-encoded layer meets the single-point encoding condition.

12. The apparatus according to claim 11, wherein the encoding module is specifically configured to:
perform encoding on each single point in each to-be-encoded layer and geometry encoding on each non-single point in each to-be-encoded layer in a case that the first indication information is used to indicate that each to-be-encoded layer in the point cloud slice meets the single-point encoding condition.

13. The apparatus according to claim 11, wherein the encoding module is further specifically configured to:
perform single-point encoding on each single point in the to-be-encoded layer and geometry encoding on each non-single point in the to-be-encoded layer in a case that the first indication information corresponding to the to-be-encoded layer indicates that the single-point encoding condition is met; or
perform geometry encoding on each to-be-encoded point in the to-be-encoded layer in a case that the first indication information corresponding to the to-be-encoded layer indicates that the single-point encoding condition is not met.

14. The apparatus according to claim 13, wherein the apparatus further comprises:
a second obtaining module configured to obtain a first number of to-be-encoded points comprised in the to-be-encoded layer and a second number of nodes comprised in the to-be-encoded layer; and
a second determining module configured to: in a case that a ratio between the first number and the second number is less than or equal to a first preset threshold, determine that the first indication information corresponding to the to-be-encoded layer indicates that the single-point encoding condition is met.

15. The apparatus according to any one of claims 11 to 14, wherein the first indication information is indication information agreed in a protocol, or the first indication information is determined based on the number of to-be-encoded points comprised in the corresponding to-be-encoded layer and the number of nodes comprised in the corresponding to-be-encoded layer.

16. A point cloud decoding apparatus, comprising:
a first obtaining module configured to obtain a target bitstream;
a first determining module configured to determine a to-be-decoded point cloud corresponding to the target bitstream based on a decoding result of the target bitstream; and
a decoding module configured to: for a point cloud slice meeting a single-point decoding condition in the to-be-decoded point cloud, perform, based on second indication information corresponding to each to-be-decoded layer in the point cloud slice, decoding on the to-be-decoded layer to generate reconstructed geometry information of the to-be-decoded point cloud, wherein the point cloud slice is generated based on block partition of a bounding box corresponding to the to-be-decoded point cloud, the to-be-decoded layer is determined based on multi-branch tree partition of the point cloud slice, and the second indication information is used to determine whether the corresponding to-be-decoded layer meets the single-point decoding condition.

17. The apparatus according to claim 16, wherein the decoding module is specifically configured to:
perform single-point decoding on each single point in each to-be-decoded layer and geometry decoding on each non-single point in each to-be-decoded layer in a case that the second indication information is used to indicate that each to-be-decoded layer in the point cloud slice meets the single-point decoding condition.

18. The apparatus according to claim 16, wherein the decoding module is further specifically configured to:
perform single-point decoding on each single point in the to-be-decoded layer and geometry decoding on each non-single point in the to-be-decoded layer in a case that the second indication information corresponding to the to-be-decoded layer indicates that the single-point decoding condition is met; or
perform geometry decoding on each to-be-decoded point in the to-be-decoded layer in a case that the second indication information corresponding to the to-be-decoded layer indicates that the single-point decoding condition is not met.

19. The apparatus according to claim 18, wherein the apparatus further comprises:
a second obtaining module configured to obtain a third number of to-be-decoded points comprised in the to-be-decoded layer and a fourth number of nodes comprised in the to-be-decoded layer; and
a second determining module configured to, in a case that a ratio between the third number and the fourth number is less than or equal to a second preset threshold, determine that the second indication information corresponding to the to-be-decoded layer indicates that the single-point decoding condition is met.

20. The apparatus according to any one of claims 16 to 19, wherein the second indication information is obtained by performing decoding on the target bitstream, or the second indication information is determined based on the number of to-be-decoded points comprised in the corresponding to-be-decoded layer and the number of nodes comprised in the corresponding to-be-decoded layer.

21. A terminal, comprising a processor and a memory, wherein the memory stores a program or instructions capable of running on the processor, and when the program or instructions are executed by the processor, the steps of the point cloud encoding method according to any one of claims 1 to 5 are implemented, or the steps of the point cloud decoding method according to any one of claims 6 to 10 are implemented.

22. A readable storage medium, wherein the readable storage medium stores a program or instructions, and when the program or instructions are executed by a processor, the steps of the point cloud encoding method according to any one of claims 1 to 5 are implemented, or the steps of the point cloud decoding method according to any one of claims 6 to 10 are implemented.

23. A chip, wherein the chip comprises a processor and a communication interface, the communication interface is coupled to the processor, and the processor is configured to run a program or instructions to implement the steps of the point cloud encoding method according to any one of claims 1 to 5 or implement the steps of the point cloud decoding method according to any one of claims 6 to 10.
